# FASCICULE DE BREVET EUROPEEN

(11) **EP 0 849 898 B1**
(45) Date de publication et mention de la délivrance du brevet: **20.10.2004**
(21) Numéro de dépôt: 97403077.7
(22) Date de dépôt: 18.12.1997
(51) Int. Cl.: H04B 10/18

(54) **Répéteur pour système de transmission à fibre optique à signaux solitons**
Zwischenverstärker für ein faseroptisches Solitonübertragungssystem
Repeater for optical fibre soliton signal transmission system

(30) Priorité: 19.12.1996 FR 9615639
(43) Date de publication de la demande: 24.06.1998
(73) Titulaire: ALCATEL, 75008 Paris (FR)
(72) Inventeur: Marcerou, Jean-François, 91100 Corbeil-Essonnes (FR)
(74) Mandataire: Lamoureux, Bernard

(56) Documents cités:
- GB-A- 2 207 827
- GB-A- 2 273 838
- NAKAZAWA M ET AL: "40GBIT/S WDM (10GBIT/S X 4 UNEQUALLY SPACED CHANNELS) COLITON TRANSMISSION OVER 10000KM USING SYNCHRONUS MODULATION AND NARROW BAND OPTICAL FILTERING" ELECTRONICS LETTERS, vol. 32, no. 9, 25 avril 1996, pages 828-830, XP000595674
- PATENT ABSTRACTS OF JAPAN vol. 096, no. 004, 30 avril 1996 & JP 07 336298 A (NIPPON TELEGR & TELEPH CORP), 22 décembre 1995,
- PATENT ABSTRACTS OF JAPAN vol. 095, no. 010, 30 novembre 1995 & JP 07 170232 A (NIPPON TELEGR & TELEPH CORP), 4 juillet 1995,

## Description

La présente invention a pour objet un répéteur pour système de transmission à fibre optique à signaux solitons, et un procédé de transmission d'informations dans un système de transmission comprenant un tel récepteur.

Elle s'applique tout particulièrement au contrôle ou à la surveillance des répéteurs du système de transmission, ou à la localisation de défauts dans le système de transmission.

Enfin, elle concerne un système de transmission à fibre optique comprenant un tel répéteur.

La transmission d'impulsions solitons ou solitons dans la partie d'une fibre optique à dispersion anormale est un phénomène connu. Les solitons sont des signaux impulsionnels de forme sech". Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus, impose une limite théorique à la qualité ou au débit des transmissions par solitons. Pour arriver à dépasser cette limite, il a été proposé des systèmes de filtres guidants glissants, permettant de contrôler la gigue des solitons transmis, voir par exemple EP-A-0 576 208. Il a aussi été proposé d'utiliser des modulateurs d'intensité ou de phase pour assurer la régénération du signal sur la ligne.

Il est connu d'utiliser pour la surveillance ou le contrôle de répéteurs, dans des systèmes de transmission à fibre optique, des fréquences de contrôle différentes des fréquences utilisées pour la transmission des signaux. Un système de transmission à fibre optique mettant en oeuvre une tel contrôle pour des répéteurs optiques est décrit dans US-A-4 899 043. q

La solution classique de US-A-4 899 043 ne peut pas s'appliquer dans un système de transmission à fibre optique à signaux solitons comprenant par exemple des filtres glissants ou des modulateurs synchrones. Si un signal basse fréquence était utilisé comme suggéré dans ce document, il ne pourrait être transmis à travers le système, du fait de la présence de filtres guidants glissants, ou de modulateurs synchrones.

US-A-5 080 505 décrit un système de transmission à fibre optique à signaux solitons, dans lequel des amplificateurs optiques situés sur la fibre à intervalles réguliers sont commandés en gain par un signal de rétroaction provenant de l'amplificateur suivant. Chaque amplificateur utilise pour lever une indétermination sur le gain, une perturbation basse fréquence, par exemple sinusoïdale, émise par l'amplificateur situé immédiatement en amont. GB-A-2 273 838 décrit aussi un système de transmission à fibre optique à signaux solitons, dans lequel on utilise localement, i.e. dans un répéteur, un signal de perturbation à basse fréquence.

US-A-5 080 505 et GB-A-2 273 838 proposent d'utiliser une perturbation basse fréquence dans des systèmes de transmission à fibre optique à signaux solitons, pour la commande de modulateurs ou d'amplificateurs. Dans ces deux documents, les signaux basse fréquence sont des perturbations sinusoïdales appliquées aux signaux transmis, et ne sont utilisés que localement, i.e. à l'intérieur d'un même répéteur, ou d'un répéteur à l'autre.

Il est aussi connu, pour la localisation de défauts dans un système de transmission utilisant des amplificateurs optiques formés de fibres dopées à l'erbium, d'utiliser la réflectométrie optique étendue dans le domaine temporel (EOTDR, ou "extended optical time domain reflectometry"), comme décrit dans l'article de S. Furukawa et al., IEEE Photonics Technology Letters, vol. 7, n° 5. Il est précisé dans ce document que la puissance optique de l'OTDR doit être maintenue aussi uniforme que possible pour éviter toute transitoire optique dans les répéteurs. Cette solution n'est donc pas susceptible d'être mise en oeuvre dans des systèmes de transmission à fibre optique à signaux solitons, dont la partie optique comprend au moins un dispositif de contrôle des signaux solitons, tel un filtre ou un modulateur synchrone.

La présente invention propose une solution originale et simple au problème du contrôle ou de la surveillance des répéteurs optiques dans un système de transmission à fibre optique à signaux solitons. Elle propose aussi une solution originale et simple au problème de la localisation des défaillances dans un tel système de transmission. Les répéteurs peuvent de façon classique comprendre des filtres, des modulateurs synchrones, ou tout autre dispositif connu, ou encore une combinaison de tels dispositifs. L'invention permet, avec des moyens réduits, d'utiliser des signaux basse fréquence pour le contrôle ou la surveillance des répéteurs. Elle permet également de faire passer des signaux servant à la localisation de défauts, par exemple des signaux de type "extended optical time domain reflectometry" (réflectométrie optique étendue dans le domaine temporel).

Plus précisément, l'invention propose un répéteur pour système de transmission à fibre optique à signaux solitons, dont la partie optique comprend au moins un dispositif de contrôle des signaux solitons, tel un filtre ou un modulateur synchrone, et une dérivation permettant le passage de signaux à une fréquence ou un format qui serait coupé par le dispositif de contrôle.

La dérivation comprend de préférence un démultiplexeur en amont du dispositif de contrôle, une longueur de fibre optique et un multiplexeur en aval du dispositif de contrôle. Elle peut aussi comprendre un coupleur en amont du dispositif de contrôle, une longueur de fibre optique et un multiplexeur en aval du dispositif de contrôle.

La dérivation peut encore comprendre un amplificateur pour les signaux à une fréquence qui serait coupée par le dispositif de contrôle, par exemple une fibre optique dopée à l'erbium.

On peut prévoir en outre une fibre optique dopée à l'erbium pour l'amplification des signaux solitons, et une source lumineuse commune pour le pompage de la fibre optique destinée à l'amplification des signaux à une fréquence ou à un format qui serait coupé par le dispositif de contrôle et de la fibre optique destinée à l'amplification des signaux solitons.

L'invention propose aussi un procédé de transmission d'informations dans un système de transmission à fibre optique à signaux solitons, comprenant au moins un tel répéteur, dans lequel sont transmis non seulement des signaux solitons, mais aussi des signaux à une fréquence ou à un format qui serait coupé par le dispositif de contrôle.

Les signaux à une fréquence qui serait coupée par le dispositif de contrôle peuvent être des signaux basse fréquence, par exemple des signaux transmis en régime normal de dispersion dans la fibre optique, ou des signaux en onde continue modulée en basse fréquence, ou encore des signaux NRZ.

Les signaux à un format qui serait coupé par le dispositif de contrôle peuvent être des signaux de réflectométrie optique étendue dans le domaine temporel.

L'invention a aussi pour objet l'application d'un tel procédé au contrôle ou à la surveillance des répéteurs, ou à la localisation des défaillances.

Enfin, l'invention propose un système optique de transmission, comprenant au moins un tel répéteur.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique de la partie optique de l'étage d'amplification d'un répéteur d'un système de transmission à signaux solitons classique;
- figure 2 une représentation schématique de la partie optique de l'étage d'amplification d'un répéteur d'un système de transmission à signaux solitons selon l'invention;
- figure 3 une représentation schématique de la partie optique de l'étage d'amplification d'un répéteur selon un premier mode de réalisation de l'invention;
- figure 4 une représentation schématique de la partie optique de l'étage d'amplification d'un répéteur selon un deuxième mode de réalisation de l'invention;
- figure 5 une représentation schématique de la partie optique de l'étage d'amplification d'un répéteur selon un troisième mode de réalisation de l'invention.

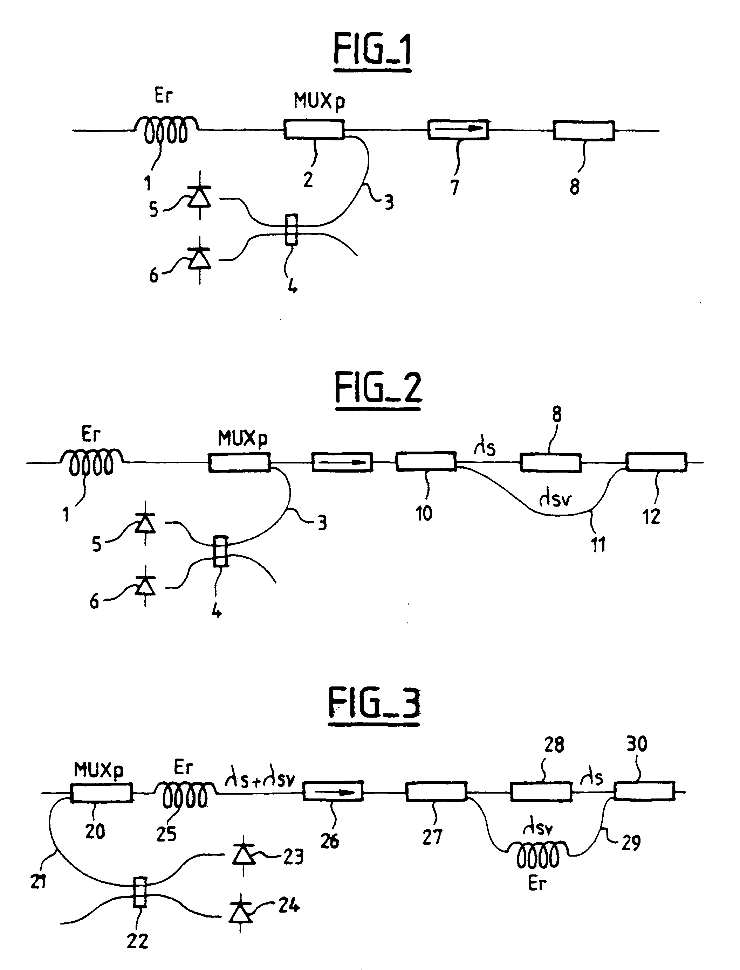

La figure 1 montre une représentation schématique de la partie optique de l'étage d'amplification d'un répéteur d'un système de transmission à signaux solitons classique. Typiquement, un tel répéteur comprend en entrée une longueur 1 de fibre servant comme amplificateur par exemple une fibre dopée à l'erbium. En aval de la fibre 1 est prévu un multiplexeur de pompage MUXp 2, qui amène dans la fibre les signaux optiques de pompage qu'il reçoit sur un tronçon de fibre 3. Celui-ci est relié par ailleurs via à un couplage 4 30/70 à 50/50 à deux diodes 5, 6 qui fournissent les signaux de pompage. En aval du multiplexeur 2 est prévu un isolateur optique 7, puis un dispositif 8 de contrôle des signaux solitons. Le dispositif 8 comprend par exemple un filtre ou encore un modulateur synchrone avec des moyens appropriés pour la récupération d'horloge. Il s'agit là des composants les plus courants, mais le dispositif 8 peut en comprendre d'autres.

Comme expliqué plus haut, il n'est pas possible dans un système de transmission à fibre optique à signaux solitons, comprenant des répéteurs classiques du type de celui de la figure 1 et des filtres glissants ou des modulateurs synchrones, d'utiliser des signaux de basse fréquence pour le contrôle ou la surveillance des répéteurs: les signaux basse fréquence seraient coupés par les filtres glissant, ou par les modulateurs synchrones, et pourraient au mieux être utilisés localement.

La figure 2 montre une représentation schématique de la partie optique de l'étage d'amplification d'un répéteur d'un système de transmission à signaux solitons selon l'invention. Le répéteur de la figure est identique à celui de la figure 1, mais comprend une dérivation permettant le passage de signaux à une fréquence qui serait coupée par le dispositif de contrôle. Cette dérivation, dans le cas de la figure 2, comprend en amont du dispositif 8 de contrôle des signaux solitons un démultiplexeur 10, relié à une extrémité d'une longueur de fibre 11 et en aval du dispositif 8 un multiplexeur 12, relié à l'autre extrémité de la fibre 11. Le démultiplexeur 10 transmet les signaux aux fréquences correspondant aux signaux solitons vers le dispositif 8, et transmet vers la fibre 11 les signaux basse fréquence. Le multiplexeur 12 multiplexe les signaux aux fréquences correspondant aux signaux solitons, qu'il reçoit du dispositif 8 et les signaux basse fréquence qu'il reçoit de la fibre 11. On a symbolisé sur la figure 2, comme sur les figures suivantes, par ls les fréquences des signaux solitons, et par lsv les signaux basse fréquence.

Le répéteur de la figure 2 permet d'éviter que des signaux basse fréquence ne soient coupés par le dispositif de contrôle des signaux solitons; il permet ainsi la transmission à travers le système de transmission de signaux basse fréquence, qui peuvent notamment être utilisés pour le contrôle ou la surveillance des répéteurs.

Par exemple, pour la surveillance des répéteurs, chaque répéteur peut surmoduler sa pompe 5, 6 par un signal basse fréquence d'une fréquence donnée constituant une signature; le signal basse fréquence correspondant est transmis jusqu'à un terminal du système de transmission où il est démodulé et traité de façon classique. On peut ainsi assurer une surveillance des répéteurs, avec un équipement supplémentaire minimal dans les répéteurs.

Pour le contrôle des répéteurs, un des terminaux peut émettre des signaux basse fréquence, qui sont récupérés, filtrés et analysés dans les répéteurs. On peut utiliser de nouveau une signature en fréquence pour chaque répéteur, ou un système plus complexe de commande. Un tel contrôle peut être utilisé pour commander le changement d'état d'un répéteur, ou pour assurer toute autre fonction.

On peut aussi utiliser un signal basse fréquence dont la fréquence est choisie en fonction des composants présents dans les répéteurs et les terminaux, en prévoyant que tout ou partie des répéteurs utilisent la même fréquence. Dans ce cas, l'identification d'un répéteur peut être portée par la trame de ce signal basse fréquence, et non pas par la fréquence du signal. On peut combiner les deux méthodes.

Les signaux utilisés peuvent dans un cas comme dans l'autre présenter une profondeur de modulation faible, et n'entraînent donc que relativement peu de perturbations dans le système de transmission.

L'invention rend possible la transmission à travers le système de signaux basse fréquence. On peut par exemple utiliser une onde continue surmodulée en basse fréquence, ou encore des signaux impulsionnels NRZ à bas débit. Les débits ou fréquences possibles peuvent aller jusqu'à quelques centaines de MHz. Des plages de longueur d'onde de 1530 à 1555 nm sont avantageuses. En effet, cette plage correspond à un régime de dispersion normale adapté dont la valeur est adaptée au format NRZ ou RZ dans la gamme de débit souhaitée, et suffisamment loin des longueurs d'onde des signaux solitons pour ne pas interagir avec eux. De plus, étant suffisamment éloignés spectralement, ces signaux offrent une facilité de démultiplexage-remultiplexage évidente. On transmet les signaux basse fréquence en régime de dispersion normal, ce qui limite les perturbations sur les canaux solitons.

L'invention propose aussi d'adapter le gain du répéteur aux basses fréquences utilisées. Les figures 3 à 5 montrent différents modes de réalisation de l'invention permettant d'adapter le gain du répéteur, dans le cas où l'on utilise une fibre dopée pour l'amplification du signal.

Dans le premier mode de réalisation de la figure 3, le répéteur comprend d'abord un multiplexeur de pompage 20, qui amène dans la fibre les signaux optiques de pompage qu'il reçoit sur un tronçon de fibre 21. Celui-ci est relié par ailleurs via à un couplage 22 30/70 à 50/50 à deux diodes 23, 24 qui fournissent les signaux de pompage. Les signaux multiplexés sont transmis à une longueur de fibre 25 dopée à l'erbium, puis ensuite à un isolateur 26. On retrouve comme sur la figure 2 le dispositif 28 de contrôle des signaux solitons, et le bipasse 29 pour le passage des signaux basse fréquence; l'isolateur 26 est relié à un démultiplexeur 27 qui sépare les signaux solitons des signaux basse fréquence, et les transmet respectivement vers le dispositif 28 et une longueur de fibre 29 formant la dérivation ou bipasse. Les signaux transmis par le dispositif 28 et la fibre 29 sont combinés par le multiplexeur 30 et transmis en sortie du répéteur. L'utilisation pour le bipasse 29 d'une longueur appropriée de fibre dopée à un indice différent de la fibre 25, permet d'adapter le gain du répéteur aux basses fréquences transmises. Comme cela apparaît clairement sur la figure, la configuration du premier mode de réalisation de l'invention permet d'utiliser une seule source de pompage.

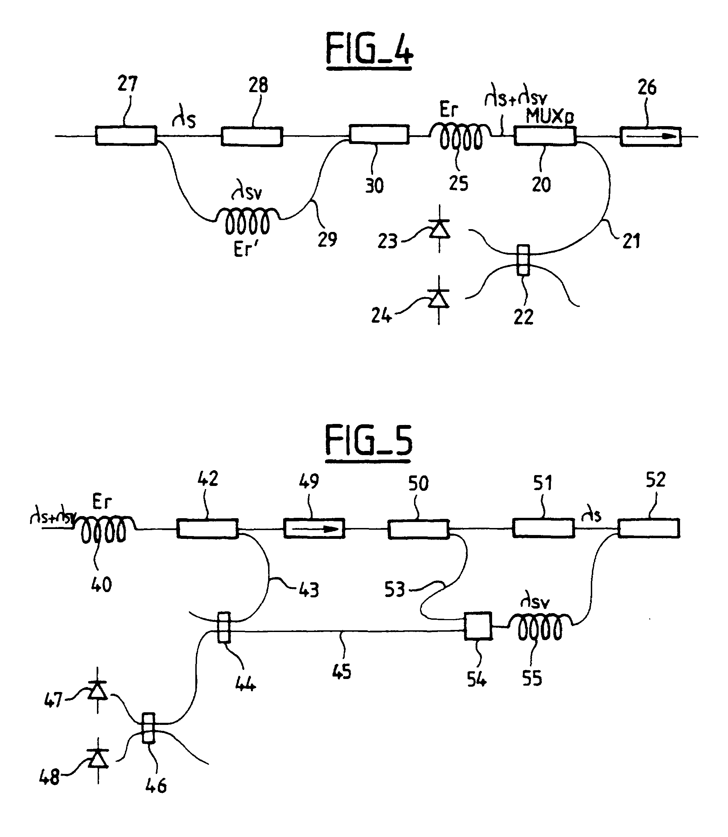

Le deuxième mode de réalisation de la figure 4 est analogue à celui de la figure 3. Toutefois, le répéteur comprend d'abord le démultiplexeur 27, le dispositif 28 de contrôle des signaux solitons, et le bipasse 29 pour le passage des signaux basse fréquence, le multiplexeur 30, la puis longueur de fibre 25 dopée à l'erbium, le multiplexeur de pompage 20, et enfin l'isolateur 26. La source de pompage est analogue à celle de la figure 3. De nouveau, le mode de réalisation de la figure 4 permet de n'utiliser qu'une source de pompage unique.

La figure 5 montre une représentation schématique de la partie optique de l'étage d'amplification d'un répéteur selon un troisième mode de réalisation de l'invention; le répéteur de la figure 5 comprend en entrée une longueur 40 de fibre servant comme amplificateur par exemple une fibre dopée à l'erbium. En aval de la fibre 40 est prévu un premier multiplexeur de pompage MUXp 42, qui amène dans la fibre les signaux optiques de pompage qu'il reçoit sur un tronçon de fibre 43. Celui-ci est relié par ailleurs via à un couplage 44 d'environ 10/90 à un tronçon de fibre 45; une extrémité du tronçon 45 est reliée via un coupleur 46 30/70 à 50/50 à deux diodes 47, 48 qui fournissent les signaux de pompage. La fibre 40 assure une amplification des signaux solitons et des signaux basse fréquence.

On trouve en aval du premier multiplexeur de pompage 42 un isolateur 49, puis un démultiplexeur 50, qui sépare les signaux solitons des signaux basse fréquence. Les signaux solitons sont transmis au dispositif de contrôle des signaux solitons 51, puis ensuite à un multiplexeur 52. Les signaux basse fréquence provenant du démultiplexeur 50 sont transmis via une longueur de fibre 53 à un deuxième multiplexeur de pompage 54 qui reçoit par ailleurs les signaux de pompage sur l'autre extrémité de la fibre 45. La sortie du deuxième multiplexeur de pompage 54 est reliée à une longueur de fibre 55 dopée qui permet d'amplifier les signaux basse fréquence. Les signaux basse fréquence amplifiés sont multiplexés par le multiplexeur 53 avec les signaux solitons provenant du dispositif de contrôle 51. L'ensemble constitue la sortie du répéteur.

Comme dans les modes de réalisation des figures 3 et 4, le mode de réalisation de la figure 5 permet d'adapter le gain du répéteur à la longueur d'onde utilisée pour les signaux basse fréquence. On pourrait aussi, dans le dispositif de la figure 5, utiliser à la place du démultiplexeur 50 un coupleur 10/90, en adaptant le cas échéant le gain dans la fibre 53. On pourrait de la même façon utiliser un coupleur à la place du multiplexeur en amont du dispositif de contrôle, dans les modes de réalisation des figures 3 et 4.

L'invention permet aussi la transmission à travers un système de transmission à fibre optique à signaux solitons de signaux dont le format serait coupé par les dispositifs de contrôles des répéteurs, tels que des filtres, des modulateurs synchrones, ou tout autre dispositif connu, ou encore une combinaison de tels dispositifs. Autrement dit, les répéteurs utilisés classiquement dans des systèmes de transmission à fibres optiques à signaux solitons présentent des dispositifs de contrôle conçus pour la transmission non-linéaire de signaux solitons, et qui ne laissent pas nécessairement passer des signaux de format différents, et par exemple des signaux NRZ ou RZ non-solitons. L'invention permet, avec des moyens réduits, d'utiliser des signaux dont le format serait ainsi coupé, comme par exemple des signaux de type "extended optical time domain reflectometry" (réflectométrie optique étendue dans le domaine temporel) mentionnés plus haut, qui peuvent servir à la localisation de défauts.

On peut donc grâce à l'invention utiliser dans des systèmes de transmission à fibre optique à signaux solitons, des signaux à des fréquences qui seraient coupées par les dispositifs de contrôle des signaux solitons, et/ou des signaux à des formats qui seraient coupés par les dispositifs de contrôle des signaux solitons. On peut combiner ces différents signaux, ou n'en utiliser qu'un type, en fonction des besoins.

Bien entendu, la présente invention n'est pas limitée aux exemples et modes de réalisation décrits et représentés, mais elle est susceptible de nombreuses variantes accessibles à l'homme de l'art. Par exemple, il est clair que l'on peut utiliser pour l'amplification des signaux d'autres dispositifs que des fibres dopées, comme sur les figures 3 à 5. Dans ce cas, le mode de réalisation de la figure 2 pourra suffire à la mise en oeuvre de l'invention. On peut aussi utiliser des sources optiques de pompage qui sont différentes des sources doubles des figures 2 à 5, et par exemple des sources simples, ou des sources de pompage indépendantes pour l'amplification des signaux solitons et l'amplification des autres signaux.

L'invention est particulièrement avantageuse pour des systèmes de transmission à signaux solitons. Elle pourrait aussi s'adapter à d'autres types de signaux, dont les dispositifs de contrôle coupent les basses fréquences ou ne laissent pas passer des formats donnés de signaux.

## Revendications

1. Un répéteur pour système de transmission à fibre optique à signaux solitons, dont la partie optique comprend au moins un dispositif de contrôle (8, 28, 51) des signaux solitons, tel un filtre ou un modulateur synchrone, et une dérivation (11, 29, 55) permettant le passage de signaux à une fréquence ou un format qui serait coupé par le dispositif de contrôle.

2. Un répéteur selon la revendication 1, **caractérisé en ce que** la dite dérivation comprend un démultiplexeur (10, 27) en amont du dispositif de contrôle, une longueur de fibre optique (11, 29) et un multiplexeur (12, 30) en aval du dispositif de contrôle.

3. Un répéteur selon la revendication 2, **caractérisé en ce que** la dite dérivation comprend un coupleur en amont du dispositif de contrôle, une longueur de fibre optique et un multiplexeur en aval du dispositif de contrôle.

4. Un répéteur selon la revendication 1, 2 ou 3, **caractérisé en ce que** la dérivation comprend un amplificateur pour les signaux à une fréquence qui serait coupée par le dispositif de contrôle.

5. Un répéteur selon la revendication 4, **caractérisé en ce que** l'amplificateur comprend une fibre optique (29, 55) dopée à l'erbium.

6. Un répéteur selon la revendication 5, **caractérisé en ce qu'**il comprend en outre une fibre optique (25, 40) dopée à l'erbium pour l'amplification des signaux solitons, et une source lumineuse commune pour le pompage de la fibre optique (29, 55) destinée à l'amplification des signaux à une fréquence qui serait coupée par le dispositif de contrôle et de la fibre optique (25, 40) destinée à l'amplification des signaux solitons.

7. Un procédé de transmission d'informations dans un système de transmission à fibre optique à signaux solitons, comprenant au moins un répéteur selon l'une des revendications 1 à 6, dans lequel sont transmis non seulement des signaux solitons, mais aussi des signaux à une fréquence qui serait coupée par le dispositif de contrôle.

8. Un procédé selon la revendication 7, dans lequel les signaux à une fréquence qui serait coupée par le dispositif de contrôle sont des signaux basse fréquence.

9. Un procédé selon la revendication 7 ou 8, dans lequel les signaux à une fréquence qui serait coupée par le dispositif de contrôle sont des signaux transmis en régime normal de dispersion dans la fibre optique.

10. Un procédé selon l'une des revendications 7 à 9, dans lequel les signaux à une fréquence qui serait coupée par le dispositif de contrôle sont des signaux en onde continue modulée en basse fréquence.

11. Un procédé selon l'une des revendications 7 à 10, dans lequel les signaux à une fréquence qui serait coupée par le dispositif de contrôle sont des signaux NRZ.

12. Un procédé selon l'une des revendications 7 à 11, dans lequel les signaux à un format qui serait coupé par le dispositif de contrôle sont des signaux de type réflectométrie optique étendue dans le domaine temporel.

13. Application du procédé selon l'une des revendications 7 à 12 au contrôle ou à la surveillance des répéteurs, ou à la localisation des défaillances.

14. Système optique de transmission, comprenant au moins un répéteur selon l'une des revendications 1 à 6.

## Claims

1. A repeater for soliton signal optical fiber transmission systems the optical part of which includes at least a soliton signal monitoring device (8, 28, 51), such as a filter or a synchronous modulator, and a branch connection (11, 29, 55) for signals having a frequency or a format that would be cut off by the monitoring device.

2. A repeater according to claim 1 **characterized in that** said branch connection includes a demultiplexer (10, 27) upstream of the monitoring device, a length (11, 29) of optical fiber and a multiplexer (12, 30) downstream of the monitoring device.

3. A repeater according to claim 2 **characterized in that** said branch connection includes a coupler upstream of the monitoring device, a length of optical fiber and a multiplexer downstream of the monitoring device.

4. A repeater according to claim 1 or claim 2 or claim 3 **characterized in that** the branch connection includes an amplifier for signals having a frequency that would be cut off by the monitoring device.

5. A repeater according to claim 4 **characterized in that** the amplifier comprises an optical fiber (29, 55) doped with erbium.

6. A repeater according to claim 5 **characterized in that** it further includes an optical fiber (25, 40) doped with erbium for amplifying the soliton signals and a common light source for pumping the optical fiber (29, 55) for amplifying the signals having a frequency that would be cut off by the monitoring device and the optical fiber (25, 40) for amplifying the soliton signals.

7. A method of transmitting information in a soliton signal optical fiber transmission system including at least one repeater according to any one of claims 1 to 6 wherein not only soliton signals but also signals having a frequency that would be cut off by the monitoring device are transmitted.

8. A method according to claim 7 wherein the signals having a frequency that would be cut off by the monitoring device are low-frequency signals.

9. A method according to claim 7 or claim 8 wherein the signals having a frequency that would be cut off by the monitoring device are signals transmitted under normal dispersion conditions in the optical fiber.

10. A method according to any one of claims 7 to 9 wherein the signals having a frequency that would be cut off by the monitoring device are continuous wave signals modulated at a low frequency.

11. A method according to any one of claims 7 to 10 wherein the signals having a frequency that would be cut off by the monitoring device are NRZ signals.

12. A method according to any one of claims 7 to 11 wherein the signals having a format that would be cut off by the monitoring device are extended optical time domain reflectometery type signals.

13. Application of the method according to any one of claims 7 to 12 to repeater monitoring or supervision or to fault location.

14. Optical transmission system including at least one repeater according to any one of claims 1 to 6.

## Patentansprüche

1. Ein Zwischenverstärker für ein faseroptisches Solitonübertragungssystem, dessen optischer Teil mindestens eine Kontrollvorrichtung (8, 28, 51) für Solitonsignale enthält, wie beispielsweise einen Filter oder einen Synchronmodulator, sowie eine Abzweigung (11, 29, 55), die die Durchleitung von Signalen mit einer Frequenz oder einem Format ermöglicht, die von der Kontrollvorrichtung unterbrochen würden.

2. Ein Zwischenverstärker gemäß Anspruch 1, **dadurch gekennzeichnet, dass** die genannte Abzweigung einen Demultiplexer (10, 27) vor der Kontrollvorrichtung, eine optische Faserlänge (11, 29) und einen Multiplexer (12, 30) nach der Kontrollvorrichtung enthält.

3. Ein Zwischenverstärker gemäß Anspruch 2, **dadurch gekennzeichnet, dass** die genannte Abzweigung einen Koppler vor der Kontrollvorrichtung, eine optische Faserlänge und einen Multiplexer nach der Kontrollvorrichtung enthält.

4. Ein Zwischenverstärker gemäß Anspruch 1, 2 oder 3, **dadurch gekennzeichnet, dass** die Abzweigung einen Verstärker für die Signale mit einer Frequenz enthält, die von der Kontrollvorrichtung unterbrochen würde.

5. Ein Zwischenverstärker gemäß Anspruch 4, **dadurch gekennzeichnet, dass** der Verstärker eine erbiumdotierte optische Faser (29, 55) enthält.

6. Ein Zwischenverstärker gemäß Anspruch 5, **dadurch gekennzeichnet, dass** er außerdem eine erbiumdotierte optische Faser (25, 40) für die Verstärkung von Solitonsignalen und einen gemeinsamen Illuminator für das Pumpen der optischen Faser (29, 55) zur Verstärkung von Signalen mit einer Frequenz enthält, die von der Kontrollvorrichtung und der optischen Faser (25, 40) zur Verstärkung der Solitonsignale unterbrochen würde.

7. Ein Verfahren zur Übertragung von Informationen in einem faseroptischen Solitonübertragungssystem, das mindestens einen Zwischenverstärker gemäß einem der Ansprüche 1 bis 6 enthält, in dem nicht nur Solitonsignale, sondern auch Signale mit einer Frequenz übertragen werden, die von der Kontrollvorrichtung unterbrochen würde.

8. Ein Verfahren gemäß Anspruch 7, bei dem es sich bei den Signalen mit einer Frequenz, die von der Kontrollvorrichtung unterbrochen würde, um Niederfrequenzsignale handelt.

9. Ein Verfahren gemäß Anspruch 7 oder 8, bei dem es sich bei den Signalen mit einer Frequenz, die von der Kontrollvorrichtung unterbrochen würde, um Signale handelt, die im normalen Dispersionsbetrieb in der optischen Faser übertragen werden.

10. Ein Verfahren gemäß einem der Ansprüche 7 bis 9, bei dem es sich bei den Signalen mit einer Frequenz, die von der Kontrollvorrichtung unterbrochen würde, um Signale mit einer Niederfrequenz-modulierten, kontinuierlichen Welle handelt.

11. Ein Verfahren gemäß einem der Ansprüche 7 bis 10, bei dem es sich bei den Signalen mit einer Frequenz, die von der Kontrollvorrichtung unterbrochen würde, um NRZ-Signale handelt.

12. Ein Verfahren gemäß einem der Ansprüche 7 bis 11, bei dem es sich bei den Signalen mit einem Format, das von der Kontrollvorrichtung unterbrochen würde, um Signale vom Typ erweiterte optische Rückstreumessung handelt.

13. Anwendung des Verfahrens gemäß einem der Ansprüche 7 bis 12 zur Kontrolle oder Überwachung von Zwischenverstärkern oder der Lokalisierung von Fehlern.

14. Optisches Übertragungssystem, bestehend aus mindestens einem Zwischenverstärker gemäß einem der Ansprüche 1 bis 6.
